Europäisches Patentamt

European Patent Office

Office européen des brevets

(11) Publication number: **0 449 498 A2**

# (12) EUROPEAN PATENT APPLICATION

(21) Application number: **91302430.3**

(22) Date of filing: **20.03.91**

(51) Int. Cl.⁵: **H04N 1/18**

(30) Priority: **26.03.90 JP 77776/90**

(43) Date of publication of application:
**02.10.91 Bulletin 91/40**

(84) Designated Contracting States:
**DE FR GB**

(71) Applicant: **SEIKO INSTRUMENTS INC.**
**31-1, Kameido 6-chome Koto-ku**
**Tokyo 136 (JP)**

(72) Inventor: **Mukainakano, Hiroshi**
**c/o Seiko Instruments Inc., 31-1 Kameido**
**6-chome**
**Koto-ku, Tokyo (JP)**
Inventor: **Kawahara, Yukito**
**c/o Seiko Instruments Inc., 31-1 Kameido**
**6-chome**
**Koto-ku, Tokyo (JP)**
Inventor: **Michida, Satoshi**
**c/o Seiko Instruments Inc., 31-1 Kameido**
**6-chome**
**Koto-ku, Tokyo (JP)**

(74) Representative: **Miller, Joseph et al**
**J. MILLER & CO. Lincoln House 296-302 High**
**Holborn**
**London WC1V 7JH (GB)**

(54) **Image reading apparatus.**

(57) The present invention provides image reading apparatus comprising a plurality of photo-electric conversion elements ($1_1$ to $1_n$) connected alternately by way of a corresponding plurality of switching elements ($2_1$ to $2_n$) to respective ones of a pair of common lines (4, 5). The common lines are connected respectively to two sample hold circuits (7, 8), which are arranged to supply image signals output sequentially from the respective photo-electric conversion elements to an output terminal.

EP 0 449 498 A2

FIG 1

The present invention relates to image reading apparatus for converting optical image information into an electrical signal, and more specifically relates to a line sensor of a multi-chip type having a plurality of photo-electric conversion elements and a scanning circuit.

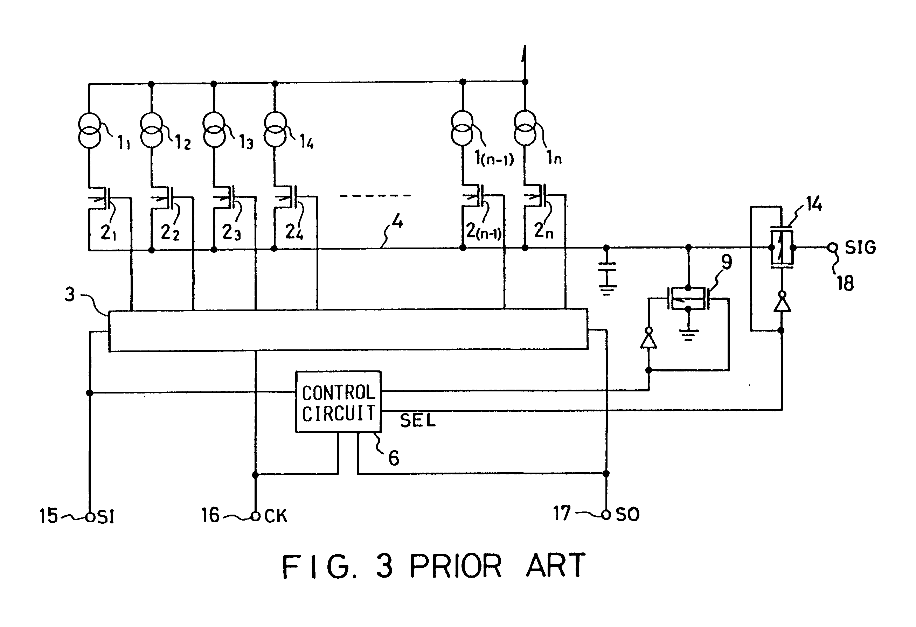

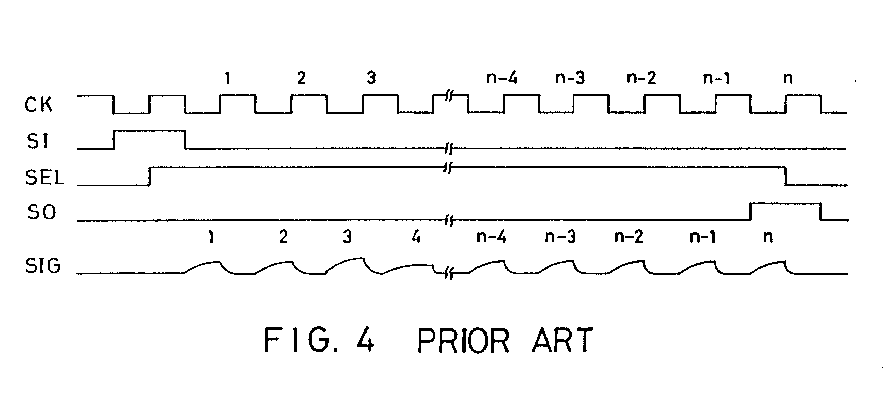

Figure 3 shows conventional image reading apparatus having photo-electric conversion elements $1_1$ to $1_n$, which are connected to a common line 4 through a plurality of first switching elements $2_1$ to $2_n$, respectively. An image signal SIG is sequentially output from an image signal output terminal 18 through a further switching element 14. Figure 4 is a timing chart showing signals arising during operation of the image reading apparatus of Figure 3.

In the conventional image reading apparatus, since a load capacitance and resistance is coupled to the common line 4, the image signal SIG produced from the respective photo-electric conversion elements $1_1$ to $1_n$ rises at a certain time constant determined by the lead capacitance and resistance. In view of this, if the frequency of a clock pulse CK for use in driving the image reading aparatus is increased, the amplitude of the resulting image signal SIG decreases, thereby causing a reduction in the SN ratio.

The present invention seeks to solve the above problem and to enable fast driving of image reading apparatus without degrading an output image signal.

According to the present invention, there is provided image reading apparatus comprising a plurality of photo-electric conversion elements, and a plurality of switching elements operable by a scanning circuit for sequentially supplying an image signal for output from each respective photo-electric conversion element, characterised in that the photo-electric conversion elements are alternately connected by way of the switching elements to respective ones of a pair of common lines, and thence to respective ones of a pair of sample hold circuits, and in that the sample hold circuits are arranged to supply the image signals sequentially from the respective photo-electric conversion elements to an output terminal.

By employing a pair of common lines, and corresponding sample hold circuits, it is possible to prolong the pulse duration of the image signal output from each photo-electric conversion element.

Further, the image reading apparatus can be driven faster than the conventional apparatus described above without a corresponding reduction in SN ratio for the image signal.

The invention is described further, by way of example, with reference to the accompanying drawings, in which:-

Figure 1 is a block diagram of image reading apparatus according to the present invention;

Figure 2 is a timing chart for signals arising during the operation of the image reading apparatus of Figure 1;

Figure 3 is a block diagram of conventional image reading apparatus; and

Figure 4 is a timing chart for signals arising during the operation of the image reading apparatus of Figure 3.

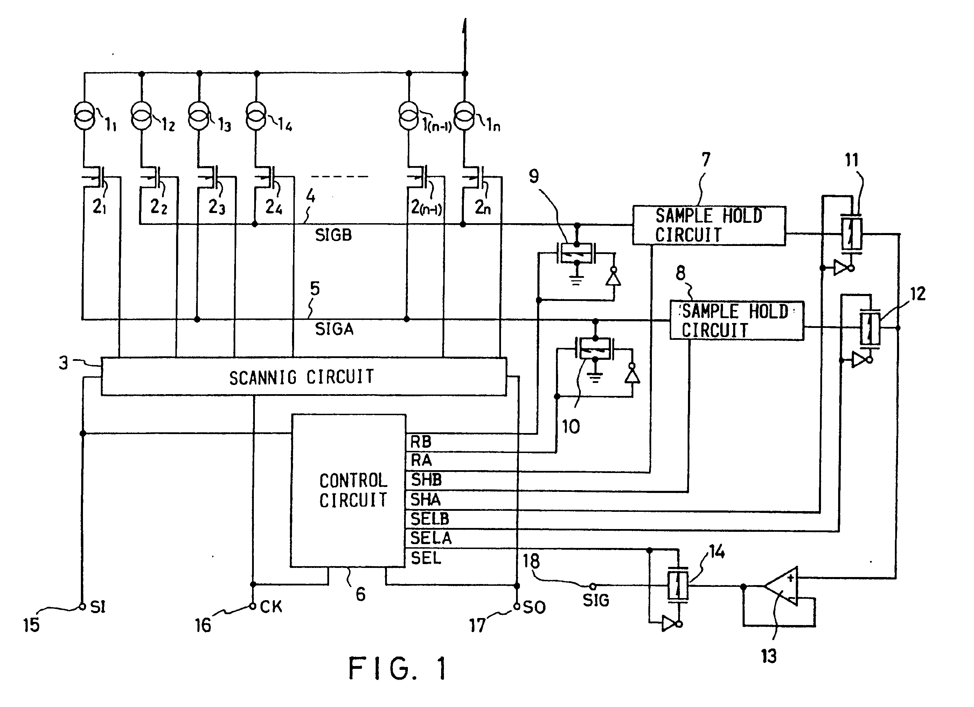

Figure 1 is a block diagram of image reading apparatus according to the present invention. A plurality of photo-electric conversion elements $1_1$ to $1_n$ are connected, respectively, to a plurality of first switching elements $2_1$ to $2_n$. Every alternate one of the first switching elements $2_1$ to $2_n$ is connected to a respective one of a pair of separate common lines 4 and 5. The first switching elements $2_1$ to $2_n$ are sequentially scanned by a scanning circuit 3. The scanning circuit 3 operates, when a scanning start signal SI is input to a scanning pulse input terminal 15, to produce scanning pulses effective to turn the first switching elements $2_1$ to $2_n$ on sequentially. A control circuit 6 operates in response to the scanning start signal SI and clock pulses CK so as to output a signal SHB effective to drive a sample hold circuit 7 to enable the same temporarily to hold an image signal which has been fed to the common line 4. Thereafter, the control circuit 6 outputs a signal RB effective to enable a second switching element 9 to couple the common line 4 to ground GND. The control circuit 6 also outputs a signal SELB effective to turn a third switching element 11 on so that the image signal held in the sample hold circuit 7 is fed to a buffer amplifer 13. By such operation, a part of the image signal is fed through the common line 4 to the buffer amplifier 13.

The remaining part of the image signal is fed through the other common line 5 to the same buffer amplifier 13 in a similar manner. Namely, the control circuit 6 outputs a signal SHA effective to drive another sample hold circuit 8 so that the image signal on the common line 5 is temporarily held in the sample hold circuit 8. Thereafter, the control circuit 6 outputs a signal RA effective to turn another second switching element 10 on so that the common line 5 is coupled to the ground GND. The control circuit 6 produces a signal SELA effective to turn another third switching element 12 on so that the image signal held in the sample hold circuit 8 is fed to the buffer amplifier 13.

After completing the driving of all of the first switching elements $2_1$ to $2_n$, the scanning circuit 3 outputs a scanning end signal SO. The control circuit 6 operates according to the start and end signals SI and SO and the clock pulses CK to produce a signal SEL effective to drive a fourth switching element 14 so as to read out the image signal from the buffer amplifier 13.

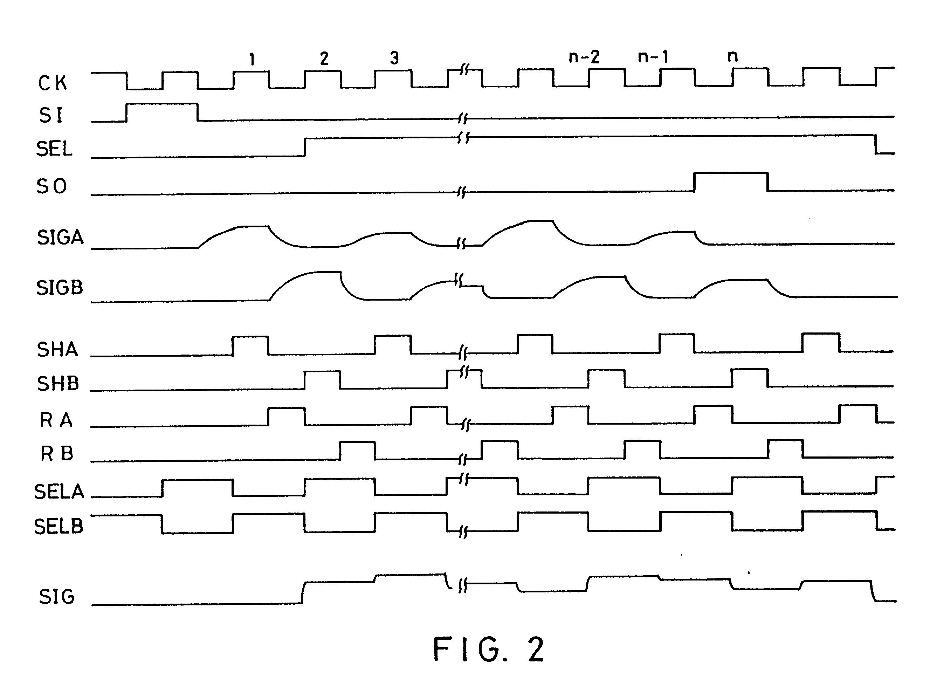

Figure 2 is a timing chart showing the signals during the operation of the image reading apparatus of Figure 1. The scanning circuit 3 operates in response to each trailing edge of the clock pulses CK. Namely, the *ith* first switching element 2i ($i = 1, 2 ..., n$) is turned on when the *ith* clock pulse CK falls, counting following the input of the start signal SI to the scanning circuit 3. The corresponding *ith* photoelectric conversion element 1i feeds an image signal SIGA to the common line 5 when the number *i* is odd, or feeds an image signal SIGB to the common line 4 when the number *i* is even. Since there are provided a pair of the common lines 4 and 5, which are selected alternately one after another, the individual photo-electric conversion element 1i can ouput its image signal during one entire period of the clock pulses CK. By contrast, in the conventional apparatus shown in Figure 4, the image signal is output only during half of one clock pulse period.

Accordingly, in the present invention, the photo-electric conversion element 1i can output its image signal for a period twice as long as that in the prior art. While the image signal in the prior art cannot rise perfectly in each output period due to the effect of the load capacitance, etc., the image signal SIGA or SIGB in the invention can rise completely during each output period when it is fed to the common line 4 or 5.

The pair of sample hold circuits 7 and 8 and the pair of third switching elements 11 and 12 co-operate together to select the image signal alternately from the common lines 4 and 5 so that the selected image signal can be output to an external circuit through a single output terminal 18. The image signal output terminal 18 outputs the image signal SIG which is retrieved sequentially from the photo-electric conversion elements $1_1$ to $1_n$ in the form of a held or latched wave shape, which can be input directly into an external A/D converter.

In the Figure 1 circuit, the first switching elements $2_1$ to $2_n$ comprise NMOS transistors for simplicity, but they may instead comprise CMOS transistors. Further, the second switching elements 9 and 10, the third switching elements 11 and 12, and the fourth switching element 14 comprise CMOS transistors in this embodiment, but they may otherwise comprise NMOS transistors. Moreover, the scanning circuit is driven in response to each trailing edge of the clock pulses CK. However, it may be driven in response to each leading edge of the clock pulses CK. In such a case, the other circuit components are also altered accordingly.

According to the present invention, the photo-electric conversion elements are alternately connected to a pair of separate common lines, and the respective common lines are connected through corresponding sample hold circuits to a single output terminal so as to output therefrom an image signal, thereby prolonging an output duration of the image signal on a bit-by-bit basis to realise fast driving of the apparatus and to improve the S/N ratio.

## Claims

1. Image reading apparatus comprising a plurality of photo-electric conversion elements ($1_1$ to $1_n$), and a plurality of switching elements ($2_1$ to $2_n$) operable by a scanning circuit (3) for sequentially supplying an image signal for output from each respective photo-electric conversion element, characterised in that the photoelectric conversion elements are alternately connected by way of the switching elements to respective ones of a pair of common lines (4, 5), and thence to respective ones of a pair of sample hold circuits (7, 8), and in that the sample hold circuits are arranged to supply the image signals sequentially from the respective photoelectric conversion elements to an output terminal (18).

2. Apparatus according to claim 1 characterised by a control circuit (6) arranged to co-operate with the scanning circuit so as to control the supply of the image signals to and from the sample hold circuits.

3. Apparatus according to claim 1 or 2 characterised by a pair of further switching elements (9, 10) arranged so as to couple the pair of common lines alternately to ground.

4. Apparatus according to claim 1 or 2 characterised by a pair of further switching elements (11, 12) arranged so as to supply outputs from the pair of sample hold circuits alternately to a buffer amplifier (13), which is connected to the output terminal.

5. Image reading apparatus characterised by a plurality of photo-electric conversion elements ($1_1$ to $1_n$) arranged linearly and integrally to one another, a plurality of first switching elements ($2_1$ to $2_n$) connected at their one terminals to the corresponding photo-electric conversion elements and connected at their other terminals alternately every one another to a pair of separate common lines (4, 5), a scanning circuit (3) responsive to a scanning start signal for sequentially scanning the first switching elements and outputting a scanning end signal after completion of the scanning, a pair of second switching elements (9, 10) connected between the respective common lines and a ground line, a pair of sample hold circuits (7, 8) having input terminals connected to the respective common lines and output terminals, a pair of third switching elements (11, 12) having one terminals connected to the respective output terminals of the sample hold circuits and other terminals, a buffer amplifier (13) having an input terminal commonly connected to the other terminals of the third switching elements and an output terminal to output externally an image signal fed from the sample hold circuits, and a control circuit (6) operative according to the scanning start signal and the scanning end signal for controlling the second and third switching elements and the pair of sample hold circuits.

FIG. 1

EP 0 449 498 A2

FIG. 2

EP 0 449 498 A2

FIG. 3 PRIOR ART

F I G. 4 PRIOR ART

EP 0 449 498 A2